# EUROPEAN PATENT SPECIFICATION

(11) **EP 3 905 855 B1**
(45) Date of publication and mention of the grant of the patent: **27.03.2024**
(21) Application number: 21159283.7
(22) Date of filing: 25.02.2021
(51) Int. Cl.: H05B 45/50

(54) **LED DRIVING PROTECTION CIRCUIT AND LAMP LED**
LED-TREIBERSCHUTZSCHALTUNG UND LED-LAMPE
CIRCUIT DE PROTECTION DE COMMANDE DE DEL ET LAMPE À DEL

(30) Priority: 30.04.2020 CN 202020714884 U
(43) Date of publication of application: 03.11.2021
(73) Proprietor: Leedarson Lighting Co., Ltd., Zhangzhou, Fujian 363000 (CN)
(72) Inventor: CHEN, Zhibin, Xiamen, Fujian 00000 (CN); WEN, Shuisheng, Xiamen, Fujian 00000 (CN); LIU, Zhengkun, Xiamen, fujian 00000 (CN); CHEN, Xiaodeng, Xiamen, Fujian 00000 (CN); LIN, Rongjie, Xiamen, Fujian 00000 (CN); LAI, Xinghan, Xiamen, Fujian 00000 (CN); LIN, Liping, Xiamen, Fujian 00000 (CN)
(74) Representative: Isarpatent

(56) References cited:
- CN-U- 206 472 347
- US-A1- 2011 031 898
- US-A1- 2012 206 433

## Description

### TECHNICAL FIELD

The invention relates to the technical field of lamps, and particularly relates to an LED driving protection circuit and a lamp.

### BACKGROUND

With the rapid development of LED (Light Emitting Diode) drive, there are more and more kinds of LED driving circuits. However, most of the existing LED driving circuits include a control module. Under an abnormal state of voltage output, a large power loss exists in the circuit. When the margin of certain components of the circuit is insufficient, burning easily occurs to cause safety problems.

US2012/206433A1 discloses an LED driving apparatus, the LED driving apparatus comprises a power feed unit, a driving control unit, a current detection unit that detects load current flowing in an LED module, and an output control unit.

US2011/031898A1 discloses a driving apparatus, the driving apparatus comprises a voltage transforming unit for transforming a direct current voltage to the drive voltage; and a plurality of detectors respectively connected to the loads for respectively detecting a forward voltage across each of the loads to generate a plurality of detecting voltages and respectively comparing the detecting voltages with a first reference voltage.

### SUMMARY

Therefore, the embodiments of the invention provide an LED driving protection circuit and a lamp so as to solve the problems that the existing LED driving circuit has a large power loss in an abnormal output state and causes safety hazards when the margin of component of the circuit is insufficient.

A first aspect of an embodiment of the invention provides an LED driving protection circuit, comprising a power supply module, a detection module, a control module and a constant current driving module;
an input end of the power supply module is connected with an external power supply, and a first output end of the power supply module is connected with a voltage end of the constant current driving module, and a second output end of the power supply module is connected with an external LED light group and a detection end of the detection module, and a third output end of the power supply module is connected with a voltage end of the detection module, and a control end of the power supply module is connected with an output end of the constant current driving module; a signal output end of the detection module is connected with a signal input end of the control module; a signal output end of the control module is connected with an input end of the constant current driving module; and the power supply module supplies power to the external LED light group, the detection module and the constant current driving module;
the detection module is configured to detect a voltage at the second output end of the power supply module, and send a feedback signal to the control module when the voltage at the second output end of the power supply module does not meet a preset voltage requirement; and the control module is configured to control the constant current driving module to be closed according to the feedback signal, a power supply voltage of the constant current driving module is pulled down to o V, and the power supply module stops supplying power to the external LED light group;
the detection module is further configured to stop outputting a signal when the voltage at the second output end of the power supply module meets the preset voltage requirement, and the control module is further configured to control the constant current driving module to start when the signal of the detection module is not received, and the power supply module supplies power to the external LED light group;
the power supply module comprises a rectifier bridge, a voltage transformation unit and a voltage stabilization unit;
an input end of the rectifier bridge is connected with the external power supply, and an output end of the rectifier bridge is connected with a primary winding of the voltage transformation unit and the voltage end of the constant current driving module; and a secondary winding of the voltage transformation unit is connected with the external LED light group, an input end of the voltage stabilization unit and the detection end of the detection module; and an output end of the voltage stabilization unit is connected with the voltage end of the detection module;
the voltage stabilization unit comprises a diode, a voltage-regulator tube, a first resistor, a second resistor, a triode, a voltage stabilizer, a first capacitor, a second capacitor and a third capacitor;
an anode of the diode is connected with the secondary winding of the voltage transformation unit, and a cathode of the diode is connected with a collector of the triode, a first end of the first capacitor and a first end of the second resistor by the first resistor;
a base electrode of the triode is connected with a second end of the second resistor and a cathode of the voltage stabilizing tube, and an emitter of the triode is connected with an input pin of the voltage stabilizer and the first end of the second capacitor; and an output pin of the voltage stabilizer is connected with a first end of the third capacitor and the voltage end of the detection module;
a second end of the first capacitor, a anode of the voltage-regulator tube, a second end of the second capacitor, a grounding pin of the voltage stabilizer and a second end of the third capacitor are all grounded.

As an embodiment of the invention, the detection module comprises a detection unit, a comparison unit and a photoelectric isolation unit;
a first end of the detection unit is connected with the second output end of the power supply module, and a second end of the detection unit is connected with an input end of the comparison unit; a voltage end of the comparison unit is connected with the third output end of the power supply module, and an output end of the comparison unit is connected with an input end of the photoelectric isolation unit; and an output end of the photoelectric isolation unit is connected with the signal input end of the control module.

As an embodiment of the invention, the detection unit comprises a third resistor, a fourth resistor and a fourth capacitor;
a first end of the third resistor is connected with the second output end of the power supply module, and a second end of the third resistor is connected with the input end of the comparison unit, a first end of the fourth capacitor, and a first end of the fourth resistor; a second end of the fourth capacitor is connected with a second end of the fourth resistor; and the second end of the fourth resistor is grounded.

As an embodiment of the invention, the comparison unit is a voltage comparison chip or a voltage comparison circuit.

As an embodiment of the invention, the detection module further comprises a protective resistor;
a first end of the protective resistor is connected with the output end of the comparison unit, and a second end of the protective resistor is connected with the input end of the photoelectric isolation unit.

As an embodiment of the invention, the constant current driving module comprises a constant current driving unit and a switch control unit;
an input end of the constant current driving unit is connected with the signal output end of the control module, and a voltage end of the constant current driving unit is connected with the first output end of the power supply module, and an output end of the constant current driving unit is connected with an input end of the switch control unit; and an output end of the switch control unit is connected with the control end of the power supply module.

As an embodiment of the invention, the switch control unit comprises a switch tube;
a source electrode of the switch tube is grounded, and a grid electrode of the switch tube is connected with the output end of the constant current driving unit, and a drain electrode of the switch tube is connected with the control end of the power supply module.

A second aspect of an embodiment of the invention provides a lamp comprising an LED light group, and further comprising an LED driving protection circuit provided by any one according to the first aspect of the embodiments.

Compared with the prior art, the LED driving protection circuit and the lamp in the embodiments of the invention have the following beneficial effects. The circuit mainly comprises the power supply module, the detection module, the control module and the constant current driving module, and is simple in structure and low in cost; the detection module is configured to detect the voltage of the power supply module, and send a feedback signal to the control module when the detected voltage does not meet the preset voltage requirement, and the control module is configured to control the constant current driving module to be closed according to the feedback signal to stop supplying power to the LED light group, so that the problem of potential safety hazards caused by overlarge circuit power loss when driving output is abnormal is solved so as to provide protection for the circuit; or when the detected voltage meets the preset voltage requirement, the output signal is stopped, the control module controls the constant current driving module to start when the signal of the detection module is not received, manual operation is reduced, and the circuit is more intelligent.

### BRIEF DESCRIPTION OF THE DRAWINGS

In order to more clearly illustrate the technical solutions in the embodiments of the invention, the following description briefly introduces the drawings used in the embodiments or the prior art, and it is obvious that the drawings in the following description are only some embodiments of the invention, and that other drawings can be obtained from these drawings by a person skilled in the art without involving any inventive effort.
Fig. 1 is a structure diagram of an LED driving protection circuit provided by an embodiment of the invention; and
Fig. 2 is a structure diagram of another LED driving circuit provided by an embodiment of the invention.

### DETAILED DESCRIPTION OF ILLUSTRATIVE EMBODIMENTS

In the following description, for purposes of explanation and not limitation, specific details are set forth such as a particular system architecture, techniques, etc. in order to provide a thorough understanding of the embodiments of the invention. However, it will be apparent to one skilled in the art that the invention may be practiced in other embodiments without these specific details. In other instances, detailed descriptions of well-known systems, installations, and methods are omitted so as not to obscure the description of the invention with unnecessary details.

In order to illustrate the technical solutions described in this invention, specific embodiments are described below.

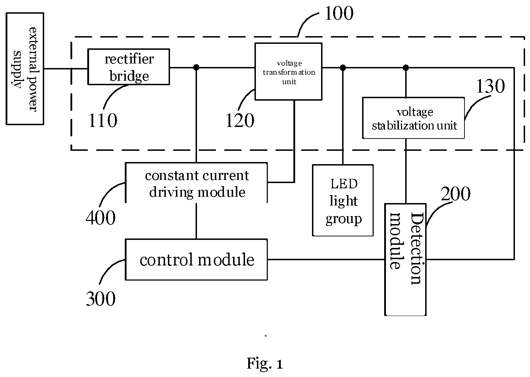

Referring to Fig. 1, the embodiment provides an LED driving protection circuit, mainly including a power supply module 100, a detection module 200, a control module 300 and a constant current driving module 400.

An input end of the power supply module 100 is connected with an external power supply, and a first output end of the power supply module 100 is connected with a voltage end of the constant current driving module 400, and a second output end of the power supply module 100 is connected with an external LED light group and a detection end of the detection module 200, and a third output end of the power supply module 100 is connected with a voltage end of the detection module 200, and a control end of the power supply module 100 is connected with an output end of the constant current driving module 400; a signal output end of the detection module 200 is connected with a signal input end of the control module 300; and a signal output end of the control module 300 is connected to an input end of the constant current driving module 400.

The power supply module 100 supplies power to the external LED light group, the detection module 200 and the constant current driving module 400.

Specifically, the detection module 200 is configured to detect a voltage at the second output end of the power supply module 100, and does not send a signal to the control module 300 when the voltage at the second output end of the power supply module 100 meets a preset voltage requirement, i.e. the whole driving circuit works normally; and the control module 300 is configured to control the constant current driving module 400 to normally work when no signal is received, and the power supply module 100 normally supplies power to the external LED light group.

The detection module 200 is further configured to send a feedback signal to the control module 300 when the voltage at the second output end of the power supply module 100 does not meet the preset voltage requirement, i.e. the driving circuit is abnormal, a short circuit or an open circuit occurs, and the power consumption is too large; the control module 300 is configured to control the constant current driving module 400 to be closed according to the feedback signal, the power supply voltage of the constant current driving module 400 is pulled down to o V, the power supply module 100 stops supplying power to the LED light group, and the whole circuit stops working, so that the problem of potential safety hazards caused by overlarge circuit power loss when driving output is abnormal is solved so as to provide protection for the circuit.

In addition, the detection module 200 is further configured to stop outputting the signal when the voltage at the second output end of the power supply module 100 meets the preset voltage requirement, i.e. the driving circuit returns to normal; and the control module 300 is further configured to control the constant current driving module 400 to start when the signal of the detection module 200 is not received, i.e. the power supply control of the constant current driving module 400 is cancelled, so that the power supply voltage of the constant current driving module 400 returns to the voltage value of normal operation. The power supply module 100 supplies power to the external LED light group, the whole circuit works normally, manual operation is reduced, and the circuit is more intelligent.

In the present invention, the power supply module 100 includes a rectifier bridge 110, a voltage transformation unit 120, and a voltage stabilization unit 130.

An input end of the rectifier bridge 110 is connected with the external power supply, and an output end of the rectifier bridge 110 is connected with a primary winding of the voltage transformation unit 120 and the voltage end of the constant current driving module 400; a secondary winding of the voltage transformation unit 120 is connected with the external LED light group, an input end of the voltage stabilization unit 130 and the detection end of the detection module 200; and an output end of the voltage stabilization unit 130 is connected to the voltage end of the detection module 200.

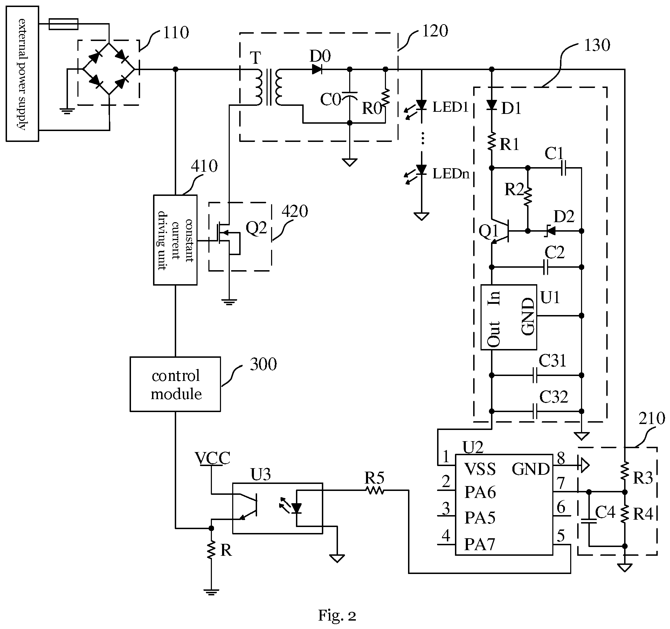

As an embodiment of the invention, referring to Fig. 2, the voltage transformation unit 120 may include a transformer T, a diode Do, a capacitor Co, and a resistor Ro. The diode Do, the capacitor Co and the resistor Ro filter the secondary winding of the transformer T, so that the interference is reduced, and the detected voltage is more accurate.

In the present invention, referring to Fig. 2, the voltage stabilization unit 130 includes a diode D1, a voltage-regulator tube D2, a first resistor R1, a second resistor R2, a triode Q1, a voltage stabilizer U1, a first capacitor C1, a second capacitor C2 and a third capacitor.

An anode of the diode D1 is connected with the secondary winding of the voltage transformation unit 120, and a cathode of the diode D1 is connected with a collector of the triode Q1, a first end of the first capacitor C1 and a first end of the second resistor R2 by the first resistor R1; a base electrode of the triode Q1 is connected with a second end of the second resistor R2 and a cathode of the voltage-regulator tube D2, and an emitter of the triode Q1 is connected with an input pin of the voltage stabilizer U1 and a first end of the second capacitor C2; an output pin of the voltage stabilizer U1 is connected with a first end of the third capacitor and the voltage end of the detection module 200; a second end of the first capacitor C1, an anode of the voltage-regulator tube D2, a second end of the second capacitor C2, a grounding pin of the voltage stabilizer U1 and a second end of the third capacitor are all grounded.

The voltage stabilization unit 130 performs voltage reduction and current limiting on the voltage output by the voltage transformation unit 120, and obtains a stable voltage by devices such as the diode D1, the triode Q1, the voltage-regulator tube D2, the voltage stabilizer U1, the resistor, the capacitor and the like to supply power to the comparison unit U2.

As one embodiment, the voltage stabilizer U1 is a three-terminal voltage stabilizer U1, and is simple in structure and low in cost. Alternatively, the third capacitor may be formed by connecting a plurality of capacitors in parallel. As shown in Fig. 2, the third capacitor may be formed by connecting capacitors C31 and C32 in parallel. This embodiment does not limit the structure of the third capacitor and connects a predetermined number of capacitors in parallel according to circuit requirements.

In an embodiment, the detection module 200 may include a detection unit 210, a comparison unit U2 and a photoelectric isolation unit U3. A first end of the detection unit 210 is connected with the second output end of the power supply module 100, and a second end of the detection unit 210 is connected with an input end of the comparison unit U2; a voltage end of the comparison unit U2 is connected with the third output end of the power supply module 100, and an output end of the comparison unit U2 is connected with an input end of the photoelectric isolation unit U3; and an output end of the photoelectric isolation unit U3 is connected with the signal input end of the control module 300.

In one embodiment, the detection unit 210 may include a third resistor R3, a fourth resistor R4 and a fourth capacitor C4; a first end of the third resistor R3 is connected with the second output end of the power supply module 100, and a second end of the third resistor R3 is connected with the input end of the comparison unit U2, a first end of the fourth capacitor C4, and a first end of the fourth resistor R4; a second end of the fourth capacitor C4 is connected with a second end of the fourth resistor R4; and the second end of the fourth resistor R4 is grounded.

The voltage at the second output end of the power supply module 100 enters the third resistor R3 and the fourth resistor R4 for voltage division, and the input end of the comparison unit U2 obtains a voltage value for judging whether the voltage is normal according to the values of the third resistor R3 and the fourth resistor R4. The fourth capacitor C4 can reduce a voltage ripple and make the detected voltage more accurate.

In one embodiment, the comparison unit U2 is a voltage comparison chip or a voltage comparison circuit. The comparison unit U2 may be an erasable chip. For example, a single chip microcomputer chip or a memory card is selected. The chip can be erased or modified, and the preset voltage requirement can be set and changed at will, or the erasable function may be realized directly by the memory card, so that debugging modification or other item reference can be facilitated; and the comparison unit U2 may also use a three-terminal voltage stabilizer or other electronic components with a comparison function to build a voltage comparison circuit formed by wirings.

In one embodiment, the photoelectric isolation unit U3 may be a photoelectric isolator, which has a good isolation effect on input and output electric signals. Referring to Fig. 2, the detection module 200 of the embodiment further includes a resistor R for protecting the photoelectric isolator.

In one embodiment, the preset voltage requirement of the embodiment may be a reference voltage, for example, 2.5 V. When the detection module 200 detects that the voltage at the second output end of the power supply module 100 is equal to 2.5 V, no feedback signal is sent to the control module 300; and when the voltage at the second output end of the power supply module 100 is not equal to 2.5 V, a feedback signal is sent to the control module 300, so that the control module 300 controls the constant current driving module 400 to stop working and protect the circuit.

The preset voltage requirement of the embodiment may also be a reference voltage range, such as 2 V-3 V. When the detection module 200 detects that the voltage at the second output end of the power supply module 100 is within 2 V-3 V, a feedback signal is not sent to the control module 300; and when the voltage at the second output end of the power supply module 100 is not within 2 V-3 V, a feedback signal is sent to the control module 300, so that the control module 300 controls the constant current driving module 400 to stop working.

In one embodiment, the detection module 200 further includes a protective resistor R5; a first end of the protective resistor R5 is connected with the output end of the comparison unit U2, and a second end of the protective resistor R5 is connected with the input end of the photoelectric isolation unit U3. The protective resistor R5 can limit the current of the signal output by the comparison unit U2 and can protect the photoelectric isolation unit U3.

In an embodiment, referring to Fig. 2, the constant current driving module 400 may include a constant current driving unit 410 and a switch control unit 420. An input end of the constant current driving unit 410 is connected with the signal output end of the control module 300, a voltage end of the constant current driving unit 410 is connected with the first output end of the power supply module 100, and an output end of the constant current driving unit 410 is connected with an input end of the switch control unit 420; and an output end of the switch control unit 420 is connected with the control end of the power supply module 100.

In one embodiment, the switch control unit 420 includes a switch tube Q2; a source electrode of the switch tube Q2 is grounded, a grid electrode of the switch tube Q2 is connected with the output end of the constant current driving unit 410, and a drain electrode of the switch tube Q2 is connected with the control end of the power supply module 100.

This embodiment does not limit the specific structure of the constant current driving unit 410, which may be a constant current driving chip or a constant current driving circuit including electronic elements.

The constant current driving unit 410 is a main circuit of the LED driving protection circuit. The constant current driving unit 410 is connected with the transformer T and the switch tube Q2, and converts input alternating current into direct current required by a product according to a turn ratio of the transformer T; and the constant current driving unit 410 controls whether the energy of the transformer T is transferred by controlling the on-off of the switch tube Q2, thereby controlling whether the whole circuit works.

It should be understood that this embodiment does not limit the specific structure of the control module 300, which may be a control chip or a control circuit including electronic elements.

Exemplarily, the operation of the LED driving protection circuit of the embodiment is described with reference to Fig. 2, as follows.

A pin 7 (an input end) of the comparison unit U2 obtains a voltage value according to the values of the third resistor R3 and the fourth resistor R4, then the comparison unit U2 compares the voltage value of the pin 7 with an internally set reference voltage (a preset voltage requirement); and if the voltage value of the pin 7 is equal to the reference voltage or falls within the preset voltage range, that is to say, meeting the preset voltage requirement, a pin 5 (an output end) of the comparison unit U2 outputs a low level. The low level is insufficient to enable the photoelectric isolation unit U3 to work, the photoelectric isolation unit U3 does not output a signal, the control module 300 does not receive the signal and controls the constant current driving module 400 to work normally, the whole driving circuit works normally, and the power supply module 100 supplies power to the LED light group normally.

If the voltage value of the pin 7 is not equal to the reference voltage or does not fall within the preset voltage range, and the output end is abnormal at the moment, the pin 5 of the comparison unit U2 outputs a high level. The high level enables the photoelectric isolation unit U3 to work, the photoelectric isolation unit U3 outputs a feedback signal to the control module 300, the control module 300 closes the power supply of the constant current driving module 400, and the power supply module 100 stops working; and the power loss in the loop is reduced, and the problem that the power loss is too large when the output is abnormal is solved.

The detection unit 210 detects the voltage at the second output end of the power supply module 100 in real time, and the pin 7 of the comparison unit U2 continuously samples and internally compares the voltage of the detection unit 210. When the voltage value of the pin 7 is equal to the preset voltage value or falls within the preset voltage range at a certain moment, the pin 5 outputs a low level, and the photoelectric isolation unit U3 does not work. The control module 300 does not receive the signal of the photoelectric isolation unit U3, the control module 300 starts the power supply of the constant current driving module 400, and at the moment, the power supply module 100 reenters a normal working state to supply power to the external LED light group, so that manual operation is reduced, and the circuit is more intelligent.

In the embodiments, the circuit mainly includes the power supply module 100, the detection module 200, the control module 300 and the constant current driving module 400, and the circuit is simple in structure and low in cost; the detection module 200 is configured to detect the voltage of the power supply module 100, and send a feedback signal to the control module 300 when the detected voltage does not meet the preset voltage requirement, and the control module 300 is configured to control the constant current driving module 400 to be closed according to the feedback signal, so that the problem of potential safety hazards caused by overlarge circuit power loss when driving output is abnormal is solved so as to provide protection for the circuit; or when the detected voltage meets the preset voltage requirement, the output signal is stopped, the control module 300 controls the constant current driving module 400 to start when the signal of the detection module 200 is not received, manual operation is reduced, and the circuit is more intelligent.

Based on the LED driving protection circuit of the embodiment above, the embodiment further provides a lamp, which includes an LED light group. The lamp further includes the LED driving protection circuit of any one of the embodiments above, and also has the beneficial effects of any one of the LED driving protection circuits above.

It can be clearly understood by a person skilled in the art that, for convenience and conciseness of description, only the division of the above-mentioned functional elements and modules is exemplified. In practical applications, the above-mentioned distribution of functions can be completed by different functional elements and models according to requirements, i.e. the internal structure of the device is divided into different functional elements or modules so as to complete all or part of the functions described above. The functional elements and modules in the embodiments may be integrated in one processing unit, or may be physically separated from each other, or may be integrated in one unit by two or more small units. The integrated units may be either in the form of hardware or in the form of software functional units. In addition, the specific names of the functional elements and modules are merely for convenience of mutual distinction, and are not used to limit the scope of protection of the application. The specific working process of the elements and modules of the system above can refer to the corresponding process in method embodiment, which is not described in detail herein.

In the embodiments described above, emphasis has been placed on the description of various embodiments. Parts of an embodiment that are not described or illustrated in detail may be found in the description of other embodiments.

The units described as separate components may or may not be physically separated, and the components shown as units may or may not be physical units, i.e. may be located in one place, or may be distributed over a plurality of network elements. Some or all of the units may be selected to achieve the objectives of the solution of the embodiment according to practical requirements.

## Claims

1. An LED driving protection circuit, comprising a power supply module (100), a detection module (200), a control module (300) and a constant current driving module (400);
**characterized in that**:
wherein an input end of the power supply module (100) is connected with an external power supply, a first output end of the power supply module (100) is connected with a voltage end of the constant current driving module (400), a second output end of the power supply module (100) is connected with an external LED light group and a detection end of the detection module (200), a third output end of the power supply module (100) is connected with a voltage end of the detection module (200), a control end of the power supply module (100) is connected with an output end of the constant current driving module (400); a signal output end of the detection module (200) is connected with a signal input end of the control module (300); a signal output end of the control module (300) is connected with an input end of the constant current driving module (400); the power supply module (100) supplies power to the external LED light group, the detection module (200) and the constant current driving module (400);
the detection module (200) is configured to detect a voltage at the second output end of the power supply module (100), and send a feedback signal to the control module (300) when the voltage at the second output end of the power supply module (100) does not meet a preset voltage requirement; the control module (300) is configured to control the constant current driving module (400) to be closed according to the feedback signal, a power supply voltage of the constant current driving module (400) is pulled down to 0 V, and the power supply module (100) stops supplying power to the external LED light group;
the detection module (200) is further configured to stop outputting a signal when the voltage at the second output end of the power supply module (100) meets the preset voltage requirement, the control module (300) is further configured to control the constant current driving module (400) to start when the signal of the detection module (200) is not received, and the power supply module (100) supplies power to the external LED light group;
wherein the power supply module (100) comprises a rectifier bridge (no), a voltage transformation unit (120) and a voltage stabilization unit (130);
an input end of the rectifier bridge (no) is connected with the external power supply, an output end of the rectifier bridge (no) is connected with a primary winding of the voltage transformation unit (120) and the voltage end of the constant current driving module (400); a secondary winding of the voltage transformation unit (120) is connected with the external LED light group, an input end of the voltage stabilization unit (130) and the detection end of the detection module (200); and an output end of the voltage stabilization unit (130) is connected with the voltage end of the detection module (200);
and wherein the voltage stabilization unit (130) comprises a diode (D1), a voltage-regulator tube (D2), a first resistor (R1), a second resistor (R2), a triode (Q1), a voltage stabilizer (U1), a first capacitor (C1), a second capacitor (C2) and a third capacitor (C31, C32);
an anode of the diode (D1) is connected with the secondary winding of the voltage transformation unit (120), a cathode of the diode (D1) is connected with a collector of the triode (Q1), a first end of the first capacitor (C1) and a first end of the second resistor (C2) by the first resistor (R1);
a base electrode of the triode (Q1) is connected with a second end of the second resistor (R2) and a cathode of the voltage-regulator tube (D2), an emitter of the triode (Q1) is connected with an input pin of the voltage stabilizer (U1) and a first end of the second capacitor (C2); an output pin of the voltage stabilizer (U1) is connected with a first end of the third capacitor (C31, C32) and the voltage end of the detection module (200); and
a second end of the first capacitor (C1), an anode of the voltage-regulator tube (D2), a second end of the second capacitor (C2), a grounding pin of the voltage stabilizer (U1) and a second end of the third capacitor (C31, C32) are all grounded.

2. The LED driving protection circuit according to claim 1, wherein the detection module (200) comprises a detection unit (210), a comparison unit (U2) and a photoelectric isolation unit (U3);
a first end of the detection unit (210) is connected with the second output end of the power supply module (100), a second end of the detection unit (210) is connected with an input end of the comparison unit (U2); a voltage end of the comparison unit (U2) is connected with the third output end of the power supply module (100), an output end of the comparison unit (U2) is connected with an input end of the photoelectric isolation unit (U3); and an output end of the photoelectric isolation unit (U3) is connected with the signal input end of the control module (300).

3. The LED driving protection circuit according to claim 2, wherein the detection unit (210) comprises a third resistor (R3), a fourth resistor (R4) and a fourth capacitor (C4);
a first end of the third resistor (R3) is connected with the second output end of the power supply module (100), a second end of the third resistor (R3) is connected with the input end of the comparison unit (U2), a first end of the fourth capacitor (C4), and a first end of the fourth resistor (R4); a second end of the fourth capacitor (C4) is connected with a second end of the fourth resistor (R4); and the second end of the fourth resistor (R4) is grounded.

4. The LED driving protection circuit according to claim 2, wherein the comparison unit (U2) is a voltage comparison chip or a voltage comparison circuit.

5. The LED driving protection circuit according to claim 2, wherein the detection module (200) further comprises a protective resistor (R5);
a first end of the protective resistor (R5) is connected with the output end of the comparison unit (U2), and a second end of the protective resistor (R5) is connected with the input end of the photoelectric isolation unit (U3).

6. The LED driving protection circuit according to claim 1, wherein the constant current driving module (400) comprises a constant current driving unit (410) and a switch control unit (420);
an input end of the constant current driving unit (410) is connected with the signal output end of the control module (300), a voltage end of the constant current driving unit (410) is connected with the first output end of the power supply module (100), an output end of the constant current driving unit (410) is connected with an input end of the switch control unit (420); and an output end of the switch control unit (420) is connected with the control end of the power supply module (100).

7. The LED driving protection circuit according to claim 6, wherein the switch control unit (420) comprises a switch tube (Q2);
a source electrode of the switch tube (Q2) is grounded, a grid electrode of the switch tube (Q2) is connected with the output end of the constant current driving unit (410), and a drain electrode of the switch tube (Q2) is connected with the control end of the power supply module (100).

8. A lamp comprising an LED light group, further comprising the LED driving protection circuit according to any one of claims 1 to 7.

## Patentansprüche

1. LED-Treiberschutzschaltung, umfassend ein Stromversorgungsmodul (100), ein Detektionsmodul (200), ein Steuermodul (300) und ein Konstantstrom-Treibermodul (400); **dadurch gekennzeichnet, dass**:
ein Eingangsende des Stromversorgungsmoduls (100) mit einer externen Stromversorgung verbunden ist, ein erstes Ausgangsende des Stromversorgungsmoduls (100) mit einem Spannungsende des Konstantstrom-Treibermoduls (400) verbunden ist, ein zweites Ausgangsende des Stromversorgungsmoduls (100) mit einer externen LED-Lichtgruppe und einem Detektionsende des Detektionsmoduls (200) verbunden ist, ein drittes Ausgangsende des Stromversorgungsmoduls (100) mit einem Spannungsende des Detektionsmoduls (200) verbunden ist, ein Steuerende des Stromversorgungsmoduls (100) mit einem Ausgangsende des Konstantstrom-Treibermoduls (400) verbunden ist; ein Signalausgangsende des Detektionsmoduls (200) mit einem Signaleingangsende des Steuermoduls (300) verbunden ist;
ein Signalausgangsende des Steuermoduls (300) mit einem Eingangsende des Konstantstrom-Treibermoduls (400) verbunden ist; das Stromversorgungsmodul (100) die externe LED-Lichtgruppe, das Detektionsmodul (200) und das Konstantstrom-Treibermodul (400) mit Strom versorgt;
das Detektionsmodul (200) dafür eingerichtet ist, eine Spannung an dem zweiten Ausgangsende des Stromversorgungsmoduls (100) zu detektieren und ein Rückkopplungssignal an das Steuermodul (300) zu senden, wenn die Spannung an dem zweiten Ausgangsende des Stromversorgungsmoduls (100) eine voreingestellte Spannungsanforderung nicht erfüllt; das Steuermodul (300) dafür eingerichtet ist, das Konstantstrom-Treibermodul (400) gemäß dem Rückkopplungssignal so zu steuern, dass es geschlossen wird, eine Stromversorgungsspannung des Konstantstrom-Treibermoduls (400) auf 0 V heruntergezogen wird, und das Stromversorgungsmodul (100) die Stromversorgung der externen LED-Lichtgruppe stoppt;
das Detektionsmodul (200) des Weiteren dafür eingerichtet ist, das Ausgeben eines Signals zu stoppen, wenn die Spannung an dem zweiten Ausgangsende des Stromversorgungsmoduls (100) die voreingestellte Spannungsanforderung erfüllt, das Steuermodul (300) des Weiteren dafür eingerichtet ist, das Konstantstrom-Treibermodul (400) so zu steuern, dass es startet, wenn das Signal des Detektionsmoduls (200) nicht empfangen wird, und das Stromversorgungsmodul (100) die externe LED-Lichtgruppe mit Strom versorgt;
das Stromversorgungsmodul (100) eine Gleichrichterbrücke (110), eine Spannungstransformationseinheit (120) und eine Spannungsstabilisierungseinheit (130) umfasst;
ein Eingangsende der Gleichrichterbrücke (110) mit der externen Stromversorgung verbunden ist, ein Ausgangsende der Gleichrichterbrücke (110) mit einer Primärwicklung der Spannungstransformationseinheit (120) und dem Spannungsende des Konstantstrom-Treibermoduls (400) verbunden ist; eine Sekundärwicklung der Spannungstransformationseinheit (120) mit der externen LED-Lichtgruppe, einem Eingangsende der Spannungsstabilisierungseinheit (130) und dem Detektionsende des Detektionsmoduls (200) verbunden ist;
und ein Ausgangsende der Spannungsstabilisierungseinheit (130) mit dem Spannungsende des Detektionsmoduls (200) verbunden ist;
und die Spannungsstabilisierungseinheit (130) eine Diode (D1), eine Spannungsreglerröhre (D2), einen ersten Widerstand (R1), einen zweiten Widerstand (R2), eine Triode (Q1), einen Spannungsstabilisator (U1), einen ersten Kondensator (C1), einen zweiten Kondensator (C2) und einen dritten Kondensator (C31, C32) umfasst;
eine Anode der Diode (D1) mit der Sekundärwicklung der Spannungstransformationseinheit (120) verbunden ist, eine Kathode der Diode (D1) mit einem Kollektor der Triode (Q1), einem ersten Ende des ersten Kondensators (C1) und einem ersten Ende des zweiten Widerstands (C2) durch den ersten Widerstand (R1) verbunden ist;
eine Basiselektrode der Triode (Q1) mit einem zweiten Ende des zweiten Widerstands (R2) und einer Kathode der Spannungsreglerröhre (D2) verbunden ist, ein Emitter der Triode (Q1) mit einem Eingangs-Pin des Spannungsstabilisators (U1) und einem ersten Ende des zweiten Kondensators (C2) verbunden ist; ein Ausgangs-Pin des Spannungsstabilisators (U1) mit einem ersten Ende des dritten Kondensators (C31, C32) und dem Spannungsende des Detektionsmoduls (200) verbunden ist; und
ein zweites Ende des ersten Kondensators (C1), eine Anode der Spannungsreglerröhre (D2), ein zweites Ende des zweiten Kondensators (C2), ein Erdungs-Pin des Spannungsstabilisators (U1) und ein zweites Ende des dritten Kondensators (C31, C32) allesamt geerdet sind.

2. LED-Treiberschutzschaltung nach Anspruch 1, wobei das Detektionsmodul (200) eine Detektionseinheit (210), eine Vergleichseinheit (U2) und eine photoelektrische Isolationseinheit (U3) umfasst;
ein erstes Ende der Detektionseinheit (210) mit dem zweiten Ausgangsende des Stromversorgungsmoduls (100) verbunden ist, ein zweites Ende der Detektionseinheit (210) mit einem Eingangsende der Vergleichseinheit (U2) verbunden ist; ein Spannungsende der Vergleichseinheit (U2) mit dem dritten Ausgangsende des Stromversorgungsmoduls (100) verbunden ist, ein Ausgangsende der Vergleichseinheit (U2) mit einem Eingangsende der photoelektrischen Isolationseinheit (U3) verbunden ist; und ein Ausgangsende der photoelektrischen Isolationseinheit (U3) mit dem Signaleingangsende des Steuermoduls (300) verbunden ist.

3. LED-Treiberschutzschaltung nach Anspruch 2, wobei die Detektionseinheit (210) einen dritten Widerstand (R3), einen vierten Widerstand (R4) und einen vierten Kondensator (C4) umfasst;
ein erstes Ende des dritten Widerstands (R3) mit dem zweiten Ausgangsende des Stromversorgungsmoduls (100) verbunden ist, ein zweites Ende des dritten Widerstands (R3) mit dem Eingangsende der Vergleichseinheit (U2), einem ersten Ende des vierten Kondensators (C4) und einem ersten Ende des vierten Widerstands (R4) verbunden ist; ein zweites Ende des vierten Kondensators (C4) mit einem zweiten Ende des vierten Widerstands (R4) verbunden ist; und das zweite Ende des vierten Widerstands (R4) geerdet ist.

4. LED-Treiberschutzschaltung nach Anspruch 2, wobei die Vergleichseinheit (U2) ein Spannungsvergleichschip oder eine Spannungsvergleichsschaltung ist.

5. LED-Treiberschutzschaltung nach Anspruch 2, wobei das Detektionsmodul (200) des Weiteren einen Schutzwiderstand (R5) umfasst;
ein erstes Ende des Schutzwiderstands (R5) mit dem Ausgangsende der Vergleichseinheit (U2) verbunden ist und ein zweites Ende des Schutzwiderstands (R5) mit dem Eingangsende der photoelektrischen Isolationseinheit (U3) verbunden ist.

6. LED-Treiber-Schutzschaltung nach Anspruch 1, wobei das Konstantstrom-Treibermodul (400) eine Konstantstrom-Treibereinheit (410) und eine Schaltsteuereinheit (420) umfasst;
ein Eingangsende der Konstantstrom-Treibereinheit (410) mit dem Signalausgangsende des Steuermoduls (300) verbunden ist, ein Spannungsende der Konstantstrom-Treibereinheit (410) mit dem ersten Ausgangsende des Stromversorgungsmoduls (100) verbunden ist, ein Ausgangsende der Konstantstrom-Treibereinheit (410) mit einem Eingangsende der Schaltsteuereinheit (420) verbunden ist; und ein Ausgangsende der Schaltsteuereinheit (420) mit dem Steuerende des Stromversorgungsmoduls (100) verbunden ist.

7. LED-Treiberschutzschaltung nach Anspruch 6, wobei die Schaltsteuereinheit (420) eine Schaltröhre (Q2) umfasst;
eine Source-Elektrode der Schaltröhre (Q2) geerdet ist, eine Gitterelektrode der Schaltröhre (Q2) mit dem Ausgangsende der Konstantstrom-Treibereinheit (410) verbunden ist und eine Drain-Elektrode der Schaltröhre (Q2) mit dem Steuerende des Stromversorgungsmoduls (100) verbunden ist.

8. Lampe, umfassend eine LED-Lichtgruppe, die des Weiteren die LED-Treiberschutzschaltung nach einem der Ansprüche 1 bis 7 umfasst.

## Revendications

1. Circuit de protection de pilotage de LED, comprenant un module d'alimentation (100), un module de détection (200), un module de commande (300) et un module de pilotage à courant constant (400) ;
**caractérisé en ce que** :
une extrémité d'entrée du module d'alimentation (100) est reliée à une alimentation externe, une première extrémité de sortie du module d'alimentation (100) est reliée à une extrémité de tension du module de pilotage à courant constant (400), une deuxième extrémité de sortie du module d'alimentation (100) est reliée à un groupe de lumières à LED externes et à une extrémité de détection du module de détection (200), une troisième extrémité de sortie du module d'alimentation (100) est reliée à une extrémité de tension du module de détection (200), une extrémité de commande du module d'alimentation (100) est reliée à une extrémité de sortie du module de pilotage à courant constant (400) ; une extrémité de sortie de signal du module de détection (200) est reliée à une extrémité d'entrée de signal du module de commande (300) ; une extrémité de sortie de signal du module de commande (300) est reliée à une extrémité d'entrée du module de pilotage à courant constant (400) ; le module d'alimentation (100) fournit de l'énergie au groupe de lumières à LED externes, au module de détection (200) et au module de pilotage à courant constant (400) ;
le module de détection (200) est configuré pour détecter une tension au niveau de la deuxième extrémité de sortie du module d'alimentation (100), et envoyer un signal de rétroaction au module de commande (300) lorsque la tension au niveau de la deuxième extrémité de sortie du module d'alimentation (100) ne satisfait pas à une exigence de tension prédéfinie ; le module de commande (300) est configuré pour commander une fermeture du module de pilotage à courant constant (400) en fonction du signal de rétroaction, une tension d'alimentation du module de pilotage à courant constant (400) est abaissée à 0 V, et le module d'alimentation (100) arrête de fournir de l'énergie au groupe de lumières à LED externes ;
le module de détection (200) est en outre configuré pour arrêter de délivrer un signal en sortie lorsque la tension au niveau de la deuxième extrémité de sortie du module d'alimentation (100) satisfait à l'exigence de tension prédéfinie, le module de commande (300) est en outre configuré pour commander un démarrage du module de pilotage à courant constant (400) lorsque le signal du module de détection (200) n'est pas reçu, et le module d'alimentation (100) fournit de l'énergie au groupe de lumières à LED externes ;
dans lequel le module d'alimentation (100) comprend un pont redresseur (110), une unité de transformation de tension (120) et une unité de stabilisation de tension (130) ;
une extrémité d'entrée du pont redresseur (110) est reliée à l'alimentation externe, une extrémité de sortie du pont redresseur (110) est reliée à un enroulement primaire de l'unité de transformation de tension (120) et à l'extrémité de tension du module de pilotage à courant constant (400) ;
un enroulement secondaire de l'unité de transformation de tension (120) est relié au groupe de lumières à LED externes, à une extrémité d'entrée de l'unité de stabilisation de tension (130) et à l'extrémité de détection du module de détection (200) ; et une extrémité de sortie de l'unité de stabilisation de tension (130) est reliée à l'extrémité de tension du module de détection (200) ;
et dans lequel l'unité de stabilisation de tension (130) comporte une diode (D1), un tube régulateur de tension (D2), une première résistance (R1), une deuxième résistance (R2), une triode (Q1), un stabilisateur de tension (U1), un premier condensateur (C1), un deuxième condensateur (C2) et un troisième condensateur (C31, C32) ;
une anode de la diode (D1) est reliée à l'enroulement secondaire de l'unité de transformation de tension (120), une cathode de la diode (D1) est reliée à un collecteur de la triode (Q1), à une première extrémité du premier condensateur (C1) et à une première extrémité de la deuxième résistance (C2) par la première résistance (R1) ;
une électrode de base de la triode (Q1) est reliée à une seconde extrémité de la deuxième résistance (R2) et à une cathode du tube régulateur de tension (D2), un émetteur de la triode (Q1) est relié à une broche d'entrée du stabilisateur de tension (U1) et à une première extrémité du deuxième condensateur (C2) ; une broche de sortie du stabilisateur de tension (U1) est reliée à une première extrémité du troisième condensateur (C31, C32) et à l'extrémité de tension du module de détection (200) ; et
une seconde extrémité du premier condensateur (C1), une anode du tube régulateur de tension (D2), une seconde extrémité du deuxième condensateur (C2), une broche de masse du stabilisateur de tension (U1) et une seconde extrémité du troisième condensateur (C31, C32) sont toutes mises à la masse.

2. Circuit de protection de pilotage de LED selon la revendication 1, dans lequel le module de détection (200) comporte une unité de détection (210), une unité de comparaison (U2) et une unité d'isolation photoélectrique(U3) ;
une première extrémité de l'unité de détection (210) est reliée à la deuxième extrémité de sortie du module d'alimentation (100), une seconde extrémité de l'unité de détection (210) est reliée à une extrémité d'entrée de l'unité de comparaison (U2) ; une extrémité de tension de l'unité de comparaison (U2) est reliée à la troisième extrémité de sortie du module d'alimentation (100), une extrémité de sortie de l'unité de comparaison (U2) est reliée à une extrémité d'entrée de l'unité d'isolation photoélectrique (U3) ; et une extrémité de sortie de l'unité d'isolation photoélectrique (U3) est reliée à l'extrémité d'entrée de signal du module de commande (300).

3. Circuit de protection de pilotage de LED selon la revendication 2, dans lequel le module de détection (200) comporte une troisième résistance (R3), une quatrième résistance (R4) et un quatrième condensateur (C4) ;
une première extrémité de la troisième résistance (R3) est reliée à la deuxième extrémité de sortie du module d'alimentation (100), une seconde extrémité de la troisième résistance (R3) est reliée à l'extrémité d'entrée de l'unité de comparaison (U2), à une première extrémité du quatrième condensateur (C4) et à une première extrémité de la quatrième résistance (R4) ; une seconde extrémité du quatrième condensateur (C4) est reliée à une seconde extrémité de la quatrième résistance (R4) ; et la seconde extrémité de la quatrième résistance (R4) est mise à la masse.

4. Circuit de protection de pilotage de LED selon la revendication 2, dans lequel l'unité de comparaison (U2) est une puce de comparaison de tension ou un circuit de comparaison de tension.

5. Circuit de protection de pilotage de LED selon la revendication 2, dans lequel le module de détection (200) comporte en outre une résistance de protection (R5) ;
une première extrémité de la résistance de protection (R5) est reliée à l'extrémité de sortie de l'unité de comparaison (U2), et une seconde extrémité de la résistance de protection (R5) est reliée à l'extrémité d'entrée de l'unité d'isolation photoélectrique (U3).

6. Circuit de protection de pilotage de LED selon la revendication 1, dans lequel le module de pilotage à courant constant (400) comporte une unité de pilotage à courant constant (410) et une unité de commande de commutation (420) ;
une extrémité d'entrée de l'unité de pilotage à courant constant (410) est reliée à l'extrémité de sortie de signal du module de commande (300), une extrémité de tension de l'unité de pilotage à courant constant (410) est reliée à la première extrémité de sortie du module d'alimentation (100), une extrémité de sortie de l'unité de pilotage à courant constant (410) est reliée à une extrémité d'entrée de l'unité de commande de commutation (420), et une extrémité de sortie de l'unité de commande de commutation (420) est reliée à l'extrémité de commande du module d'alimentation (100).

7. Circuit de protection de pilotage de LED selon la revendication 6, dans lequel l'unité de commande de commutation (420) comporte un tube de commutation (Q2) ; une électrode de source du tube de commutation (Q2) est mise à la masse, une électrode de grille du tube de commutation (Q2) est reliée à l'extrémité de sortie de l'unité de pilotage à courant constant (410), et une électrode de drain du tube de commutation (Q2) est reliée à l'extrémité de commande du module d'alimentation (100).

8. Lampe comprenant un groupe de lumières à LED, comprenant en outre le circuit de protection de pilotage de LED selon l'une quelconque des revendications 1 à 7.
